# EUROPÄISCHE PATENTSCHRIFT

(11) **EP 2 794 339 B1**
(45) Veröffentlichungstag und Bekanntmachung des Hinweises auf die Patenterteilung: **29.07.2020**
(21) Anmeldenummer: 12812233.0
(22) Anmeldetag: 19.12.2012
(51) Int. Cl.: B60L 15/20, B60L 3/00, B60L 3/04, B60L 7/10, H02J 7/14, B60L 50/50

(54) **VERFAHREN UND VORRICHTUNG ZUM ANPASSEN EINER SPANNUNGSGRENZE IN EINEM BORDNETZ**
METHOD AND DEVICE FOR ADAPTING A VOLTAGE LIMIT IN AN ELECTRICAL SYSTEM
PROCÉDÉ ET DISPOSITIF D'ADAPTATION D'UNE LIMITE DE TENSION DANS UN RÉSEAU DE BORD

(30) Priorität: 19.12.2011 DE 102011088973; 03.12.2012 WO PCT/EP2012/074262
(43) Veröffentlichungstag der Anmeldung: 29.10.2014
(73) Patentinhaber: Robert Bosch GmbH, 70442 Stuttgart (DE); SEG Automotive Germany GmbH, 70499 Stuttgart (DE)
(72) Erfinder: SCHMIDT, Matthias, 70197 Stuttgart (DE)
(74) Vertreter: Steinbauer, Florian
(86) Internationale Anmeldenummer: PCT/EP2012/076237
(87) Internationale Veröffentlichungsnummer: WO 2013/092765

(56) Entgegenhaltungen:
- DE-A1- 4 307 907
- DE-A1- 10 046 631
- DE-A1-102005 016 300
- DE-A1-102009 000 222
- GB-A- 2 201 848
- JP-A- 2010 252 572
- US-A- 5 847 520

## Beschreibung

Die vorliegende Erfindung betrifft ein Verfahren zum Steuern einer Spannungsgrenze für eine maximal zulässige Betriebsspannung in einem Bordnetz eines Hybrid-Fahrzeuges und eine entsprechende Vorrichtung.

### Stand der Technik

Bei Bordnetzen von Fahrzeugen tritt das Problem auf, dass diese eine feste Spannungsgrenze aufweisen. Die Spannungsgrenze stellt einen maximal zulässigen Spannungswert für die Spannung im Bordnetz dar. Überschreitet die tatsächliche Spannung im Bordnetz, d.h. eine Ist-Spannung, die vorgegebene Spannungsgrenze, kann die tatsächliche Spannung kurzgeschlossen oder anderweitig begrenzt werden, damit die Spannungsgrenze im Bordnetz eingehalten wird.

Werden beim Bremsen des Fahrzeugs über einen Generatorbetrieb jedoch Spannungen erzeugt, die über der Spannungsobergrenze liegen, so werden diese oftmals aus Sicherheitsgründen kurzgeschlossen oder anderweitig begrenzt, so dass diese nicht zum Wiederaufladen eines Akkumulators oder einer Batterie dienen können. Daher weisen Fahrzeuge, die diese Bordnetze verwenden, einen hohen Kraftstoffverbrauch auf.

Aus der DE 43 07 907 A1 ist eine Regelung der Spannung auf einen Sollwert bekannt. Dieser Sollwert wird beim Beschleunigen des Fahrzeugs auf einen unteren Wert gesetzt, beim Bremsen auf einen oberen Wert, ansonsten auf einen Wert nominalen Wert, der dazwischen liegt Damit wird also der Sollwert der Spannung in Abhängigkeit von Beschleunigungswerten bzw. Beschleunigungsvorzeichen verändert.

In der DE 100 46 631 A1 wird beschrieben, dass eine Rekuperation bei Stillstand, d.h. bei Geschwindigkeit Null, nicht stattfindet. Zudem wird bei Rekuperation die Sollwertspannung angepasst, wobei aber zum Rekuperieren eine hohe Spannung nötig ist.

Die DE 10 2009 000 222 A1 beschäftigt sich mit der Variation der Ausgangsspannung eines Spannungswandlers in Abhängigkeit davon, ob ein Rekuperationssignal vorliegt, wobei im Rekuperationsbetrieb eine erhöhte Ladespannung verwendet werden soll.

Die DE 10 2005 016 300 A1 beschäftigt sich mit der Veränderung einer Sollspannung eines Zwischenkreises. Diese soll bei sinkender Fahrzeuggeschwindigkeit erhöht werden, bei ansteigender Fahrzeuggeschwindigkeit erniedrigt Die JP 2010 252572 A zeigt ein Verfahren zur Steuerung einer Spannungsgrenze.

### Offenbarung der Erfindung

Es ist die der Erfindung zugrundeliegende Aufgabe, ein Bordnetz anzugeben, das eine effizientere Verwendung von Bremsenergie ermöglicht und gleichzeitig eine hohe Sicherheit aufweist. Aspekte der Erfindung sind in den unabhängigen Ansprüchen 1 und 8 dargestellt.

Gemäß einem Aspekt der Erfindung wird diese Aufgabe durch ein Verfahren zum Steuern einer Spannungsgrenze für eine maximal zulässige Betriebsspannung in einem Bordnetz eines Fahrzeuges gelöst, das den Schritt eines Anpassens der Spannungsgrenze in Abhängigkeit von Fahrzeugdaten umfasst. Dadurch wird der Vorteil erreicht, dass je nach Fahrzeugsituation und -Bedingung unterschiedliche Spannungsobergrenzen für die Spannung in einem Bordnetz festgelegt werden können und so die im Bordnetz verfügbare Spannung zu jedem Zeitpunkt effizient gespeichert und verwendet wird.

Dies bedeutet, dass erfindungsgemäß ein Verfahren zum Steuern der Spannungsgrenze für die maximal zulässige Betriebsspannung im Bordnetz des Fahrzeuges vorgeschlagen wird, das den Schritt des Anpassens der Spannungsgrenze in Abhängigkeit von Fahrzeugdaten enthält, wobei eine Ist-Spannung ermittelt wird und die Ist-Spannung kurzgeschlossen oder begrenzt wird, wenn die Ist-Spannung die Spannungsgrenze überschreitet

Erfindungsgemäß zeigen die Fahrzeugdaten die Geschwindigkeit des Fahrzeugs an die und die Spannungsgrenze wird in Abhängigkeit der Geschwindigkeit angepasst. Durch die Verwendung von Geschwindigkeitsdaten wird der Vorteil erreicht, dass sich die Spannungsgrenze flexibel je nach Geschwindigkeit des Fahrzeugs verändern lässt.

Die Fahrzeugdaten können Daten über eine gegenwärtige Geschwindigkeit, beispielsweise ein Geschwindigkeitsmesswert, eine Beschleunigung, beispielsweise ein Beschleunigungsmesswert oder eine sonstige Bewegung des Fahrzeugs sein. Weiter können die Fahrzeugdaten Daten über die Aktivierung oder eine Deaktivierung eines Bremssystems sein, beispielsweise beim Betätigen eines Bremspedals. Außerdem können die Fahrzeugdaten Daten über den Verriegelungs- oder Schließzustand bestimmter Teile des Fahrzeugs sein, wie beispielsweise einer Motorhaube oder einer Batterieabdeckung. Daneben können die Fahrzeugdaten jedoch alle anderen Daten umfassen, durch deren Verwendung die maximal zulässige Spannung, d.h. die Spannungsgrenze, in dem Bordnetz sinnvoll gesteuert werden kann.

Erfindungsgemäß wird die Spannungsgrenze bei Überschreiten einer vorgegebenen Geschwindigkeit des Fahrzeugs angehoben, beispielsweise bei einer vorgegebenen Geschwindigkeit von 10 km/h. Durch das Anheben der Spannungsgrenze entsteht der Vorteil, dass bei höheren Geschwindigkeiten des Fahrzeugs, bei denen gleichzeitig höhere Spannungen beim Bremsen auftreten, eine von einem Bremsgenerator erzeugte Spannung effizient verwendet werden kann.

In einer weiteren vorteilhaften Ausführungsform wird die Spannungsgrenze unterhalb der vorgegebenen Geschwindigkeit auf einen vorgegebenen Wert gesetzt, insbesondere einen Wert von 60 V. Dadurch entsteht beispielsweise der Vorteil, dass auf aufwendige Berührungsschutzmaßnahmen der Elektronik verzichtet werden kann.

In einer weiteren vorteilhaften Ausführungsform wird ein Spannungswert, der einen Lastabwurf in dem Bordnetz anzeigt, in Abhängigkeit der angepassten Spannungsgrenze gesetzt. Dadurch wird der Vorteil erreicht, dass auch bei veränderlicher Spannungsobergrenze in dem Bordnetz, ein Lastabwurf zuverlässig erfasst wird und geeignete Maßnahmen getroffen werden können.

In einer weiteren vorteilhaften Ausführungsform liegt der Spannungswert, der einen Lastabwurf in dem Bordnetz anzeigt, jeweils um einen vorgegebenen Betrag über der angepassten Spannungsgrenze, beispielsweise um einen vorgegebenen Betrag von 5 V. Dadurch wird der Vorteil erreicht, dass ein Lastabwurf besonders sicher erfasst werden kann.

In einer weiteren vorteilhaften Ausführungsform sind die Fahrzeugdaten Daten, die ein Betätigen eines Bremspedals anzeigen und die Spannungsgrenze wird in Abhängigkeit einer Betätigung des Bremspedals angepasst. Dadurch wird der Vorteil erreicht, dass mit besonders einfachen Mitteln eine Situation erkannt werden kann, in der es zu einer höheren Spannung im Bordnetz kommen kann.

In einer weiteren vorteilhaften Ausführungsform wird die Spannungsgrenze beim Betätigen eines Bremspedals angehoben und die angehobene Spannungsgrenze nach einer vorgegebenen Zeitspanne nach einem Loslassen des Bremspedals abgesenkt. Dadurch wird der Vorteil erreicht, dass ein besonders sicheres Verfahren realisiert wird, bei dem die Spannungsgrenze im Wesentlichen nur während der Betätigen eines Bremspedals angehoben wird.

In einer weiteren vorteilhaften Ausführungsform zeigen die Fahrzeugdaten eine Beschleunigung des Fahrzeugs an und die Spannungsgrenze wird in Abhängigkeit einer Beschleunigung angepasst. Dadurch wird der Vorteil erreicht, dass die Sicherheit des Bordnetzes weiter verbessert wird, da ein erhöhter, maximal zulässiger Spannungswert für die Bordspannung nur während demjenigen Zeitraum verwendet wird, in dem im Bordnetz eine erhöhte Spannung beispielsweise aufgrund einer Bremsung auftreten kann.

Gemäß einem weiteren Aspekt der Erfindung wird die erfindungsgemäße Aufgabe durch eine Vorrichtung zum Steuern einer Spannungsgrenze für eine maximal zulässige Betriebsspannung in einem Bordnetz eines Fahrzeugs gelöst, die eine Anpassungsvorrichtung zum Anpassen der Spannungsgrenze in Abhängigkeit von Fahrzeugdaten umfasst. Dadurch werden die gleichen Vorteile erreicht, wie durch das entsprechende Verfahren.

### Kurze Beschreibung der Zeichnungen

Weitere Ausführungsbeispiele werden Bezug nehmend auf die beiliegenden Zeichnungen erläutert. Es zeigen:
Fig. 1 ein Ersatzschaltbild für eine Batterie,
Fig. 2 eine erste Ausführungsform des erfindungsgemäßen Verfahrens,
Fig. 3 eine zweite Ausführungsform des erfindungsgemäßen Verfahrens, und
Fig. 4 ein Bordnetz mit einer Vorrichtung zum Steuern einer Spannungsgrenze für eine maximal zulässige Betriebsspannung.

### Ausführungsformen der Erfindung

Im Rahmen der öffentlich geführten CO2-Diskussion sowie stetig steigender Kraftstoffpreise gewinnen Systeme zur Reduzierung des Kraftstoffverbrauchs und der CO2-Emissionen an Bedeutung.

Eine Möglichkeit das Ziel eines niedrigeren Kraftstoffverbrauchs zu erreichen, besteht in einer Hybridisierung des Antriebsstranges, bei der der Antriebstrang sowohl einen Elektroantrieb als auch einen Verbrennungsantrieb/Verbrennungsmotor aufweist. Die Kraftstoffeinsparung wird durch die Rückgewinnung (Rekuperation) der beim Bremsen freiwerdenden kinetischen Energie oder der freiwerdenden potentiellen Energie bei Bergabfahrt erreicht. Beispielsweise kann die zurückgewonnene Energie verwendet werden, um das fahrzeugeigene Bordnetz zu versorgen. Dies hat einen deutlich positiven Einfluss auf den Kraftstoffverbrauch. Schlüsselkomponenten für die Hybridisierung des Antriebsstrangs sind ein Elektroantrieb sowie eine Leistungsbatterie.

Insbesondere kann das Drehmoment des Verbrennungsmotors durch ein Drehmoment des Elektroantriebs erhöht werden (Boost), um beispielsweise die Fahrdynamik zu verbessern, wie beispielsweise in sogenannten Boost-Rekuperationssystemen. Wird durch Rekuperation mehr Energie zurückgewonnen als für die Versorgung des Bordnetzes und die Boostfunktion benötigt wird, so besteht ferner die Möglichkeit, das Drehmoment des Verbrennungsmotors gezielt zu reduzieren und durch ein Drehmoment des Elektroantriebs zu kompensieren oder zu ergänzen. Durch diese Lastpunktverschiebung kann eine Reduzierung des Kraftstoffverbrauchs erreicht werden.

Daneben müssen jedoch auch weitere Funktionen sichergestellt werden. So ist beispielsweise eine sichere Versorgung des elektrischen Bordnetzes mit Energie auch während längerer Standphasen im Leerlauf sicherzustellen, beispielsweise in Stausituationen. Dies erfordert eine Versorgung des Bordnetzes durch den Generator auch bei stehendem Fahrzeug.

Im Folgenden soll unter dem Begriff des Elektroantriebs eine Einheit aus Elektromotor/elektrischer Maschine und Wechselrichter verstanden werden, die sowohl motorisch, d.h. zum Antreiben des Fahrzeugs, als auch generatorisch, d.h. zum Wiedergewinnen von elektrischer Energie, betrieben werden kann.

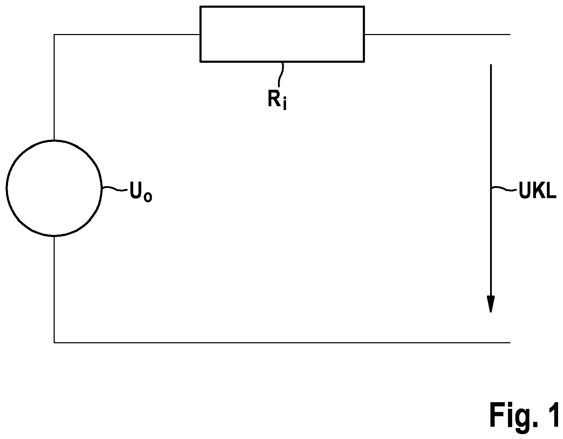

Fig. 1 zeigt ein einfaches Ersatzschaltbild einer Batterie als Teil eines Bordnetzes in einem Hybrid-Fahrzeug.

Um die Batterie zu laden, muss die Klemmenspannung UKL über die Ruhespannung U0 der Batterie hinaus angehoben werden, da ein Ladestrom der Batterie in erster Näherung durch den Innenwiderstand gemäß der Formel I = (UKL-U0)/Ri begrenzt ist.

Soll die Batterie nun während einem Zeitraum, in dem Energie beim Bremsen zurückgewonnen wird, d.h. in einer Rekuperationsphase, mit möglichst hohem Strom geladen werden, so führen die Innenwiderstände von Batterie und Zuleitung dazu, dass an den Batterieanschlüssen eine deutlich über der Ruhespannung U0 liegende Spannung anliegen muss, um einen Strom zum Laden der Batterie zu erzeugen. Beispielsweise treten bei Li-Ion-Batterien mit Nickel-Cobalt-Mangan (NCM)-Zellchemie mit 14 Zellen in Serie Spannungen um bzw. über 60 V auf.

Bei der Wahl der Batterie ist es vorteilhaft, eine möglichst hohe Ausgangsspannung zu wählen, um mit einem vorgegebenen Strom eine möglichst hohe Boost- oder Rekuperationsleistung zu erzeugen. Insbesondere im motorischen Betrieb (Boost) ist eine hohe Ausgangsspannung Voraussetzung, um auch bei höheren Drehzahlen die Boostfunktion ausüben zu können.

Um jedoch sicherzustellen, dass bei hohen Spannungen keine Personen gefährdet werden, sollte sichergestellt werden, dass die Spannung im Bordnetz stets kleiner als 60V ist, insbesondere wenn Teile des Bordnetzes von Personen berührt werden können, beispielsweise von Wartungs- oder Servicepersonal. Dies kann aber mit bekannten Mitteln nur erreicht werden, wenn die Batteriespannung ausreichend gering gewählt wird und während der Rekuperation ein Spannungsanstieg über 60 V bei maximalem Strom vermieden wird.

Im Stand der Technik wird daher die maximal zulässige Generatorspannung oder die Spannung des Bordnetzes in der Regel auf einen bestimmten Wert begrenzt, um sich aufwändige Maßnahmen zum elektrischen Isolieren von Stromleitungen oder zum Berührungsschutz zu ersparen. Jedoch führen diese Maßnahmen zwangsläufig zu einer Begrenzung des Batteriestroms und der Speicherleistung. Die generatorische Bremsleistung, d.h. die Rekuperationsleistung, kann daher nicht effizient zurückgewonnen werden, was automatisch zu einer Erhöhung des Kraftstoffverbrauchs führt.
Daneben kann in derartigen Bordnetzen mit Rekuperation ein sogenannter Lastabwurf auftreten, insbesondere wenn ein Elektroantrieb beim Bremsen generatorisch betrieben wird und die Batterie unerwartet abgeschaltet oder getrennt wird. Da es aber eine gewisse Zeit dauert, bis sich das Magnetfeld abgebaut hat, induziert der Generator eine für diesen Moment zu hohe Strommenge und es entsteht eine sogenannte Spannungsspitze im Bordnetz, die beispielsweise einen vorgegebenen Spannungswert von 60 V deutlich überschreiten kann. Diesen Vorgang wird auch als Load Dump bezeichnet.

Werden bei einem aufgetretenen Lastabwurf keine geeigneten Gegenmaßnahmen eingeleitet, kann die erzeugte Spannungsspitze zur Zerstörung von elektrischen Bauteilen des Bordnetzes führen.

Zur Begrenzung der Spannung bei einem Lastabwurf sind verschiedenen Maßnahmen möglich. Eine dieser Gegenmaßnahmen ist es, den elektrischen Antrieb über einen Wechselrichter kurzzuschließen. Jedoch muss der aktive Kurzschluss aktiv angesteuert oder bewirkt werden. Daher wird ein Lastabwurf zunächst erfasst, indem festgestellt wird, ob die Spannung im Bordnetz oder am Elektroantrieb einen vorgegebenen Spannungswert überschreitet oder ob ein entsprechender Spannungsanstieg vorliegt. Dabei sollte eine ausreichend große Detektionsschwelle zwischen der maximal zulässigen Generator- oder Bordnetzspannung und dem Schwellenwert zum Erfassen eines Lastabwurfs gewählt werden. Auf die Erfassung eines derartigen Lastabwurfes hin werden dann geeignete Gegenmaßnahmen eingeleitet.

Heutige Hybridfahrzeuge weisen neben dem Verbrennungsmotor typischerweise einen Elektroantrieb mit einer Spannung von über 100 V auf. Für Einstiegshybridisierungen sind jedoch auch Spannungen von unter 100 V denkbar, insbesondere unter 60 V, da in diesem Fall ein deutlich geringerer Aufwand für den Berührschutz erforderlich ist.

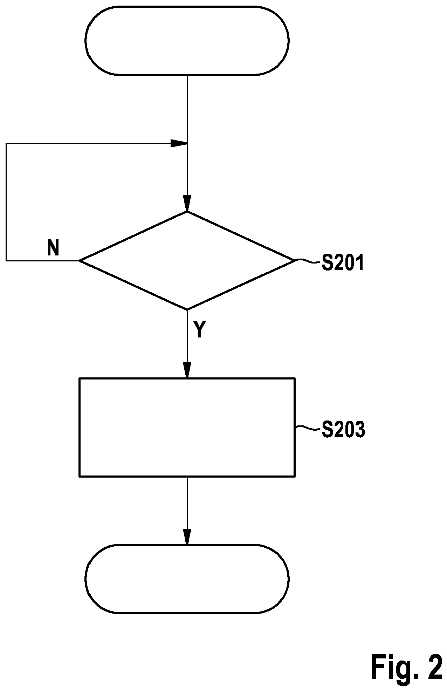

Fig. 2 zeigt eine erste Ausführungsform des erfindungsgemäßen Verfahrens. Zunächst wird in Schritt S201 anhand von Fahrzeugdaten festgestellt, ob eine vorgegebene Fahrzeugbedingung vorliegt.

Die Fahrzeugdaten können Daten über eine gegenwärtige Geschwindigkeit, beispielsweise ein Geschwindigkeitsmesswert, eine Beschleunigung, beispielsweise ein Beschleunigungsmesswert oder eine sonstige Bewegung des Fahrzeugs anzeigen. Weiter können die Fahrzeugdaten Daten über die Aktivierung oder eine Deaktivierung eines Bremssystems sein, beispielsweise ein Betätigen eines Bremspedals. Außerdem können die Fahrzeugdaten Daten über den Verriegelungs- oder Schließzustand bestimmter Teile des Fahrzeugs sein, wie beispielsweise eines Verriegelungs- oder Schließzustandes einer Motorhaube oder einer Batterieabdeckung. Daneben können die Fahrzeugdaten jedoch alle anderen Daten umfassen, durch deren Verwendung die maximal zulässige Spannung, d.h. die Spannungsgrenze, in dem Bordnetz sinnvoll gesteuert werden kann. Die als Fahrzeugdaten dienenden Daten können von unterschiedlichen Sensoren erfasst und an eine Steuervorrichtung für die Spannungsgrenze übermittelt werden. Derartige Sensoren können durch einen Geschwindigkeitssensor, einen Beschleunigungssensor, einen Verriegelungssensor oder durch andere Sensoren zum Erfassen eines bestimmten IstWertes gebildet sein.

Liegt nach der Feststellung anhand der Fahrzeugdaten eine bestimmte Fahrzeugbedingung vor, wird das Verfahren mit Schritt S203 fortgesetzt, in dem ein Anpassen der Spannungsgrenze für eine maximal in dem Bordnetz zulässige Spannung vorgenommen wird.

Unter der erfindungsgemäßen Anpassung der maximal in dem Bordnetz zulässigen Spannung ist auch die Anpassung in einem Teilbereich des Bordnetzes zu verstehen, beispielsweise in demjenigen Teilbereich des Bordnetzes, der den Rekuperationsgenerator oder Elektroantrieb umfasst.

Als mögliche Fahrzeugbedingungen S201 sind unterschiedliche Bedingungen denkbar, bei deren Eintreten jeweils unterschiedliche Anpassungsschritte S203 der Spannungsgrenze in dem Bordnetz vorgenommen werden.

Beispielsweise kann als eine Bedingung S201 ein Überschreiten einer vorgegebenen Fahrzeuggeschwindigkeit verwendet werden, wie beispielsweise 10 km/h. Tritt diese Bedingung ein, findet ein Anpassen der Spannungsgrenze S203 in dem Bordnetz dadurch statt, dass die Spannungsgrenze angehoben wird, beispielsweise von 60 V auf 64 V. Dadurch wird der Vorteil erreicht, dass eine Person, wie beispielsweise ein Servicetechniker, bei stehendem Fahrzeug nicht durch eine hohe Spannung gefährdet wird und sich die Sicherheit des Bordnetzes verbessert. Sinkt die Fahrzeuggeschwindigkeit wieder unter den vorgegebenen Geschwindigkeitswert kann die Spannungsgrenze wieder abgesenkt werden, beispielsweise von 64V auf 60V.

Die Geschwindigkeit kann beispielsweise über die Drehgeschwindigkeit der Fahrzeugräder oder über ein GPS-Signal ermittelt werden. Die Erfassung über ein GPS-Signal bietet den Vorteil, dass die Spannungsgrenze nur bei einem sich tatsächlich bewegenden Fahrzeug angehoben wird. Befindet sich das Fahrzeug jedoch auf einem Motorprüfstand, so kann durch Verwenden des GPS-Signals zur Geschwindigkeitsdetektion sicher verhindert werden, dass eine Spannungsgrenze angehoben wird, obwohl eine Drehbewegung der Fahrzeugräder stattfindet. Jedoch ist es ebenfalls denkbar, sowohl eine Drehgeschwindigkeit der Räder als auch ein GPS-Signal in Kombination zu verwenden, um die Geschwindigkeit des Fahrzeugs zu überprüfen.
Durch eine temporäre Anhebung der Bordnetzspannung in Abhängigkeit der Geschwindigkeit wird der Vorteil erreicht, dass das Begrenzen der Bordspannung, nicht zu einem erhöhten Verbrauch des Fahrzeugs führt.

Als eine alternative Bedingung S201 kann das Erfassen eines Stillstandes des Fahrzeugs verwendet werden. Tritt diese Bedingung ein, findet ein Anpassen der Spannungsgrenze S203 in dem Bordnetz dadurch statt, dass die Spannungsgrenze im Stillstand auf einen bestimmten Wert gesetzt wird, der als ungefährlich anzusehen ist. Dadurch wird ebenfalls der Vorteil erreicht, dass die Sicherheit des Bordnetzes verbessert wird. Auch in diesem Fall kann der Stillstand des Fahrzeugs über einen Stillstand der Fahrzeugräder oder über ein GPS-Signal erfasst werden.

Als eine weitere alternative Bedingung S201 kann das Erfassen einer negativen Beschleunigung, d.h. ein Abbremsen, des Fahrzeugs verwendet werden. Tritt diese Bedingung ein, findet ein Anpassen der Spannungsgrenze S203 in dem Bordnetz dadurch statt, dass die Spannungsgrenze auf einen bestimmten Wert erhöht wird, beispielsweise von 60 V auf 64 V. Dadurch wird der Vorteil erreicht, dass sich die Sicherheit des Bordnetzes weiter verbessert, da ein erhöhter maximal zulässiger Spannungswert für die Bordspannung nur dann verwendet wird, wenn in dem Bordnetz eine erhöhte Spannung auftreten kann. Ein Beschleunigungswert kann beispielsweise durch einen Beschleunigungssensor oder über die Ableitung einer erfassten Geschwindigkeit nach der Zeit festgestellt werden. Auch hier kann ein Überschreiten eines vorgegebenen Beschleunigungswertes als Schwellenwert dazu verwendet werden, den Anpassungsschritt S203 vorzunehmen.

Als eine weitere alternative Bedingung S201 kann das Erfassen eines Aktivierens eines Bremssystems, beispielsweise das Treten oder Betätigen des Bremspedals, des Fahrzeugs verwendet werden. Tritt diese Bedingung ein, findet ein Anpassen der Spannungsgrenze S203 in dem Bordnetz dadurch statt, dass eine Spannungsgrenze auf einen bestimmten Wert erhöht wird, beispielsweise von 60 V auf 64 V, sofern die Geschwindigkeit über einer bestimmten Schwelle liegt. Dadurch wird der Vorteil erreicht, dass auf weitere Sensoren zum Erfassen einer Beschleunigung verzichtet werden kann und sich der Aufbau vereinfacht.

Nachfolgend kann die erneute Deaktivierung des Bremssystems erfasst werden. Nach einer bestimmten Zeitspanne nach dem Deaktivieren des Bremssystems kann die maximal zulässige Spannungsgrenze in dem Bordnetz erneut abgesenkt werden, beispielsweise auf 60 V. Durch das erneute Absenken der Spannungsgrenze wird die Sicherheit des Bordnetzes wieder hergestellt.

Als eine weitere alternative Bedingung S201 kann das Erfassen einer Öffnung oder einer Entriegelung einer Motorhaube oder einer Batterieabdeckung des Fahrzeugs verwendet werden. Tritt diese Bedingung ein, findet ein Anpassen S203 der Spannungsgrenze in dem Bordnetz dadurch statt, dass die Spannungsgrenze auf einen vorgegebenen ungefährlichen Wert gesetzt wird, beispielsweise auf einen Wert unterhalb von 60 V. Dadurch wird der Vorteil erreicht, dass eine hohe Sicherheit des Bordnetzes beim Öffnen der Motorhaube gewährleistet ist und ansonsten auch bei still stehendem Fahrzeug hohe Betriebsspannungen verwendbar sind.

Statt den oben geschilderten Bedingungen sind jedoch im Allgemeinen auch andere Bedingungen zum Anpassen der maximal zulässigen Spannungsgrenze in dem Bordnetz denkbar, die auf der einen Seite die Sicherheit des Bordnetzes verbessern und auf der anderen Seite den Kraftstoffverbrauch des Fahrzeugs positiv beeinflussen, indem während Rekuperationsphasen die Spannungsgrenze für eine maximal zulässige Betriebsspannung temporär angehoben oder geändert wird..

Derartige Bedingungen können beispielsweise Fahr-, oder Bewegungsbedingungen des Fahrzeugs oder Verschluss- oder Entriegelungsbedingungen bestimmter Teile des Fahrzeugs sein.

Durch das dynamische Anpassen der Spannungsgrenze wird der Vorteil erreicht, dass auch Batterien höherer Ausgangsspannung oder Ruhespannung verwendet werden können, wie beispielsweise NCM-Li-Ion-Zellen mit 14 Zellen mit einer Ausgangsspannung nahe bei 60 V, und die Effizienz des Antriebsstrangs verbessert wird. Obwohl während des Fahrzeugbetriebes in dem Bordnetz temporär Spannungen von über 60 V auftreten können, kann trotzdem auf Berührungsschutzmaßnahmen weitestgehend verzichtet werden. Insgesamt kann durch die situationsabhängige Anpassung der Bordnetzspannung damit ein hocheffizientes und trotzdem äußert sicheres Bordnetzsystem bereitgestellt werden.

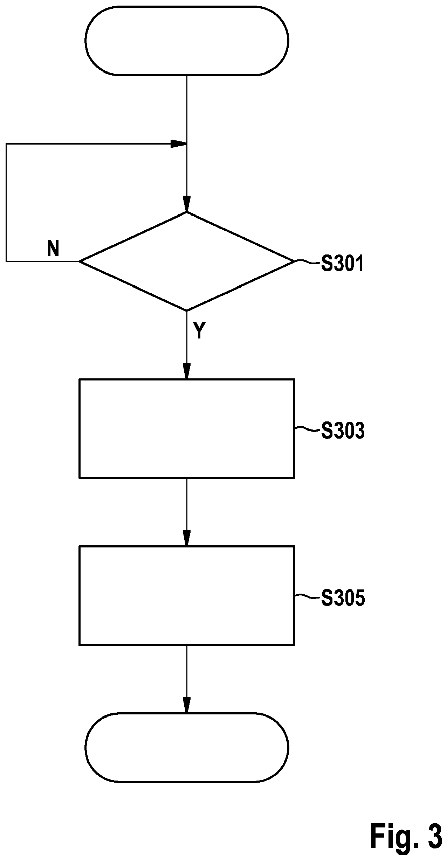

Fig. 3 zeigt eine weitere Ausführungsform des erfindungsgemäßen Verfahrens. In dieser Ausführungsform entsprechen die Verfahrensschritte S301 und S303 jeweils den Verfahrensschritten S201 und S203. Zusätzlich umfasst das in Fig. 3 gezeigte Verfahren einen weiteren Schritt S305, in dem ein Spannungswert angepasst wird, der einen Lastabwurf in dem Bordnetz anzeigt. Dies geschieht direkt nachdem die Spannungsgrenze für eine maximal in dem Bordnetz zulässige Spannung angepasst wird. Der Spannungswert, der einen Lastabwurf in dem Bordnetz anzeigt, stellt somit einen Schwellenwert dar, bei dessen Überschreiten weitere Schutzmaßnahmen vor einem Lastabwurf eingeleitet werden.

Eine in Schritt S305 vorgenommene Anpassung kann beispielsweise ein Erhöhen, Setzen oder Absenken des Spannungswertes zum Erfassen eines Lastabwurfes umfassen. Besonders vorteilhaft ist es, wenn der Spannungswert zum Erfassen eines Lastabwurfes, um einen festen Voltbetrag über der maximal zulässigen Spannungsgrenze in dem Bordnetz liegt, beispielsweise um 5 V. Hierbei wird der Spannungswert zum Erfassen eines Lastabwurfes der Spannungsgrenze für die maximal zulässige Betriebsspannung nachgeführt. Verändert sich die maximal zulässige Spannungsgrenze in dem Bordnetz, wird somit automatisch auch der Schwellenwert für die Erfassung des Lastabwurfs derart geändert, dass ein sicheres Erfassen eines stattfindenden Lastabwurf ermöglicht wird.

Dadurch wird der Vorteil erreicht, dass ein Lastabwurf auch bei veränderter oder angepasster Spannungsgrenze in dem Bordnetz sicher erfasst wird und Fehlauslösungen eines Lastabwurfschutzes vermieden werden, wie beispielsweise das Kurzschließen eines Wechselrichters.

Anstelle der maximal zulässigen Spannung kann auch die momentane Sollspannung als Aufsetzpunkt für die Lastabwurferkennung verwendet werden, da die Sollspannung kleiner als die maximal zulässige Spannung ist. Fährt beispielsweise ein Fahrzeug mit 50 km/h könnte die maximal zulässige Spannung 62 V betragen. Die von der maximal zulässigen Spannung abweichende Sollspannung könnte jedoch ohne stattfindende Rekuperation bei einem Spannungswert von 57 V liegen. In diesem Fall könnte ausgehend von der Sollspannung der Schwellenwert zum Erfassen eines Lastabwurfs durch Hinzuzählen eines Spannungsintervalls von 5 V zu der Sollspannung auf 62 V gesetzt werden.

Die dynamische Nachführung der Lastabwurf-Erkennungsschwelle ist daher eine Voraussetzung, um auch im Falle eines Lastabwurfes die Berührschutzspannungsgrenzen sicher einzuhalten und trotzdem bei höherer Geschwindigkeit das volle Rekuperationspotential nutzen zu können.

Bei Fahrzeugen, bei denen ein Verbrennungsmotor automatisch wiedergestartet wird, wenn beispielsweise die Batterie bei Stillstand des Fahrzeuges aufgrund der Entladung durch das Bordnetz einen kritischen Ladezustand erreicht hat, kann ein Motorhauben-Schalter zum Erfassen eines Öffnungszustandes der Motorhaube dazu genutzt werden, dass bei geöffneter Motorhaube ein generatorischer Betrieb entweder immer oder zumindest bei stehendem Fahrzeug verboten wird.

Wird der generatorische Betrieb nicht zugelassen, kann kein Lastabwurf auftreten und die Bordnetzspannung ist auf die maximale Batteriespannung begrenzt. Bei Verwendung einer Li-Ion-Batterie mit 14 Zellen liegt damit die Bordnetzspannung unter einem Wert von 60 V.

Die oben beschriebenen Maßnahmen dienen somit dazu, in Hybridfahrzeugen eine Berührungsschutzspannungsgrenze von beispielsweise 60 V in bestimmten Situationen einzuhalten. Diese Maßnahmen stellen sicher, dass Spannungen, die über einem vorgegebenen Wert von beispielsweise 60 V liegen, von Personen nicht berührt werden können und trotzdem das Rekuperations- und Kraftstoffeinsparpotential nicht aufgrund dieser Spannungsgrenze limitiert wird.

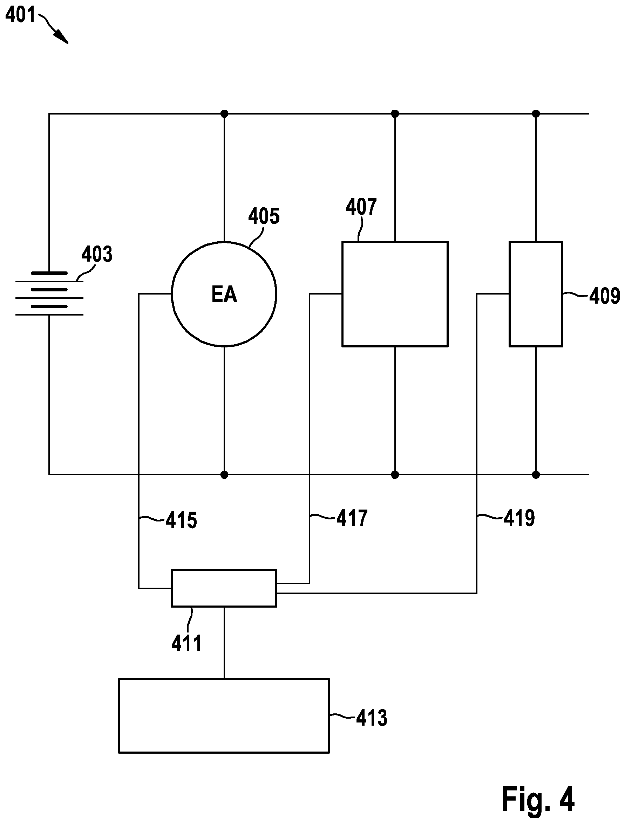

Fig. 4 zeigt ein erfindungsgemäßes Bordnetz 401, das geeignet ist, eine Spannungsgrenze für eine maximal zulässige Spannung in dem Bordnetz 401 anzupassen. Das Bordnetz 401 umfasst einen Energiespeicher 403 für elektrische Energie, beispielsweise eine Batterie oder einen Akkumulator, einen Elektroantrieb 405 zum elektrischen Antreiben des Hybrid-Fahrzeugs, eine optionale steuerbare Spannungsbegrenzungsvorrichtung 407, eine Spannungserfassungsvorrichtung 409 und eine Steuervorrichtung 411.

Die Batterie 403 ist derart angepasst, dass bei einem Rekuperationsbetrieb anfallende Strommengen sicher gespeichert werden können. Beispielsweise kann eine derartige Batterie eine Li-Ion-Batterie oder eine andere Batterie sein, die zu diesem Zweck geeignet ist.

Der Elektroantrieb 405 dient nicht nur zum Antreiben des Fahrzeuges, sondern auch zum Zurückgewinnen elektrischer Energie im Rekuperationsbetrieb. Insbesondere können je nach Art und Intensität der Energierückgewinnung unterschiedlich hohe Spannungen in das Bordnetz eingespeist werden. Daneben umfasst der Elektroantrieb einen nicht gezeigten Wechselrichter, der im Falle eines Lastabwurfs über eine Steuerleitung 415 durch eine Steuervorrichtung 411 kurzgeschlossen wird. Das Kurzschließen der Phasen der elektrischen Maschine durch den Wechselrichter bildet dabei eine wirksame Maßnahme gegen den Spannungsanstieg durch den Lastabwurf und verhindert, dass elektrische Bauteile des Bordnetzes beschädigt werden.

Der optionale, steuerbare Spannungsbegrenzer 407 ist ebenfalls über eine Steuerleitung 417 mit der Steuervorrichtung 411 verbunden und begrenzt eine in dem Bordnetz auftretende Spannung bis zu einem eingestellten Grenzwert, der die maximal zulässige Spannungsgrenze darstellt. Ein derartiger Spannungsbegrenzer kann beispielsweise durch eine Spannungsbegrenzerschaltung gebildet sein.

Die Spannungserfassungsvorrichtung 409 dient zum Erfassen der Spannung im Bordnetz 401, wie beispielsweise ein Spannungsmessgerät. Der erfasste Spannungswert wird über eine Signalleitung 419 an die Steuervorrichtung 411 übermittelt. Bei Überschreiten des Grenzwertes zur Erkennung eines Lastabwurfs wird durch die Steuervorrichtung 411 eine Maßnahme zur Begrenzung der Spannung im Bordnetz ausgelöst, z.B. Kurzschließen der Phasen durch den Wechselrichter.

Die Steuervorrichtung 411 verarbeitet die eingehenden Signale, um auf Grundlage dieser Signale eine Steuerung durchzuführen. Einerseits steuert die Steuervorrichtung 411 den Wechselrichter des Elektroantriebs 405 derart, dass dieser bei Überschreiten eines Spannungswertes, der einen Lastabwurf in dem Bordnetz anzeigt, kurzgeschlossen wird. Der Spannungswert zum Erfassen eines Lastabwurfs wird dabei von der Steuervorrichtung 411 in Abhängigkeit der gewählten, maximal zulässigen Spannungsgrenze eingestellt.

Weiter ist die Steuervorrichtung 411 mit einem Sensor 413 verbunden. Der Sensor 413 übermittelt gemessene Fahrzeugdaten an die Steuervorrichtung 411, die die Grundlage zur Bestimmung der maximal zulässigen Spannungsgrenze in dem Bordnetz 411 bilden. Erfüllen die Fahrzeugdaten eine vorgegebene Bedingung wird die maximal zulässige Spannungsgrenze angepasst.

Die Spannungsgrenze stellt einen maximal zulässigen Spannungswert für die Spannung im Bordnetz dar. Überschreitet die tatsächliche Spannung im Bordnetz, d.h. eine Ist-Spannung, die vorgegebene Spannungsgrenze, kann die tatsächliche Spannung kurzgeschlossen oder anderweitig begrenzt werden oder alternativ die Spannungsgrenze temporär angehoben oder verändert werden.

Bei dem Sensor 413 kann es sich beispielsweise um einen Geschwindigkeitssensor, einen Beschleunigungssensor, einen Bewegungssensor, einen Verriegelungssensor, wie beispielsweise einen Motorhauben-Sensor oder einen Bremssystem-Aktivierungssensor handeln. Im Allgemeinen kommen alle Sensoren in Betracht, die geeignete Daten liefern, um die oben beschriebene Steuerung einer maximal zulässigen Spannungsobergrenze in dem Bordnetz ausführen zu können.

Die Steuervorrichtung 411 kann durch eine geeignete elektrische Schaltung, eine programmierbare Logik oder einen Prozessor gebildet sein und einen flüchtigen oder nichtflüchtigen Speicher umfassen, in dem Steuerungsparameter und -Programme abgelegt sind.

Die erfindungsgemäße Vorrichtung zum Steuern einer Spannungsgrenze für eine maximal zulässige Betriebsspannung in einem Bordnetz eines Fahrzeugs ist jedoch nicht auf das gezeigte Bordnetz beschränkt, sondern kann ebenfalls in geeigneten anderen Bordnetzen oder Teilbordnetzen zum Einsatz kommen.

Die vorliegende Erfindung eignet sich prinzipiell für alle Fahrzeuge mit Hybridantrieb oder reiner Rekuperationsfunktion. Einzelne, in Verbindung mit den unterschiedlichen Ausführungsformen beschriebene Merkmale der Erfindung können in beliebiger Weise miteinander kombiniert werden, um deren vorteilhafte Wirkungen zu erreichen.

### BEZUGSZEICHENLISTE

- Ukl: Klemmspannung
- U0: Ruhespannung
- Ri: Innenwiderstand
- S201-S203: Verfahrensschritte
- S301-S303: Verfahrensschritte
- 403: Batterie
- 405: Elektroantrieb
- 407: Spannungsbegrenzungsvorrichtung
- 409: Spannungserfassungsvorrichtung
- 411: Steuervorrichtung
- 413: Sensor
- 415: Steuerleitung
- 417: Steuerleitung
- 419: Signalleitung

## Patentansprüche

1. Verfahren zum Steuern einer Spannungsgrenze für eine maximal zulässige Betriebsspannung in einem Bordnetz (401) eines Fahrzeuges, wobei eine Ist-Spannung des Bordnetzes auf eine Sollspannung geregelt wird, und wobei die Sollspannung kleiner ist als die maximal zulässige Betriebsspannung, und wobei die Ist-Spannung kurzgeschlossen oder anderweitig begrenzt wird, wenn die Ist-Spannung die maximal zulässige Betriebsspannung im Bordnetz (401) überschreitet, mit dem Schritt:
- Anpassen (S203) der Spannungsgrenze in Abhängigkeit von Fahrzeugdaten,
**dadurch gekennzeichnet, dass** die Fahrzeugdaten die Geschwindigkeit des Fahrzeugs anzeigen und die Spannungsgrenze in Abhängigkeit von der Geschwindigkeit angepasst wird,
wobei die Spannungsgrenze bei Überschreiten einer vorgegebenen Geschwindigkeit des Fahrzeugs angehoben wird, und wobei die Spannungsgrenze, wenn die Fahrzeuggeschwindigkeit wieder unter die vorgegebene Geschwindigkeit sinkt, wieder abgesenkt wird

2. Verfahren nach Anspruch 1, wobei die Spannungsgrenze unterhalb der vorgegebenen Geschwindigkeit auf einen vorgegebenen Wert gesetzt wird, insbesondere einen Wert unterhalb von 60 V.

3. Verfahren nach einem der vorangehenden Ansprüche, wobei ein Spannungswert, der einen Lastabwurf in dem Bordnetz anzeigt, in Abhängigkeit von der angepassten Spannungsgrenze gesetzt wird.

4. Verfahren nach Anspruch 3, wobei der Spannungswert, der einen Lastabwurf in dem Bordnetz anzeigt, jeweils um einen vorgegebenen Betrag über der angepassten Spannungsgrenze liegt.

5. Verfahren nach einem der vorangehenden Ansprüche, wobei die Fahrzeugdaten Daten sind, die ein Betätigen eines Bremspedals anzeigen und die Spannungsgrenze in Abhängigkeit von einer Betätigung des Bremspedals angepasst wird.

6. Verfahren nach Anspruch 5, wobei die Spannungsgrenze beim Betätigen eines Bremspedals angehoben wird und die angehobene Spannungsgrenze nach einer vorgegebenen Zeitspanne nach einem Loslassen des Bremspedals abgesenkt wird.

7. Verfahren nach einem der vorangehenden Ansprüche, wobei die Fahrzeugdaten eine Beschleunigung des Fahrzeugs anzeigen und die Spannungsgrenze in Abhängigkeit von einer Beschleunigung angepasst wird.

8. Vorrichtung zum Steuern einer Spannungsgrenze für eine maximal zulässige Betriebsspannung in einem Bordnetz (401) eines Fahrzeugs, welche ausgebildet ist, alle Schritte des Verfahrens nach einem der vorhergehenden Ansprüche auszuführen, mit:
- Mitteln zum Erfassen einer Ist-Spannung des Bordnetzes,
- Mitteln zum Regeln der Ist-Spannung des Bordnetzes auf eine Sollspannung,
- Mitteln zum Kurzschließen oder anderweitigen Begrenzen der Ist-Spannung und
- einer Anpassungsvorrichtung (407, 411) zum Anpassen der Spannungsgrenze in Abhängigkeit von Fahrzeugdaten.

## Claims

1. A method for controlling a voltage limit for a maximum allowable operating voltage in an on-board network (401) of a vehicle, wherein an actual voltage of the on-board network is regulated to a setpoint voltage, and wherein the setpoint voltage is smaller than the maximum permissible operating voltage, and wherein the actual voltage is short-circuited or otherwise limited if the actual voltage exceeds the maximum permissible operating voltage in the on-board network (401), comprising the step
- adjusting (S203) the voltage limit depending on vehicle data,
**characterised in that** the vehicle data indicate the speed of the vehicle and the voltage limit is adjusted as a function of the speed,
wherein the voltage limit is raised when a predetermined speed of the vehicle is exceeded, and wherein the voltage limit is lowered again when the vehicle speed drops below the predetermined speed.

2. The method according to claim 1, wherein, below the predetermined speed, the voltage limit is set to a predetermined value, in particular a value below 60 V.

3. The method according to one of the preceding claims, wherein a voltage value indicating a load dump in the on-board network is set depending on the adapted voltage limit.

4. The method according to claim 3, wherein the voltage value indicating a load dump in the on-board network is in each case above the adapted voltage limit by a predetermined amount.

5. The method according to any of the preceding claims, wherein the vehicle data is data indicating actuation of a brake pedal and the voltage limit is adjusted in response to actuation of the brake pedal.

6. The method according to claim 5, wherein the voltage limit is raised when a brake pedal is operated and the raised voltage limit is lowered after a predetermined period of time after the brake pedal is released.

7. The method according to one of the preceding claims, wherein the vehicle data indicates an acceleration of the vehicle and the voltage limit is adjusted depending on an acceleration.

8. A device for controlling a voltage limit for a maximum allowable operating voltage in an on-board network (401) of a vehicle, which is configured to perform all steps of the method according to any of the preceding claims, comprising:
- means for detecting an actual voltage of the on-board network,
- means for regulating the actual voltage of the on-board network to a setpoint voltage,
- means for short-circuiting or otherwise limiting the actual voltage and
- an adjusting device (407, 411) for adjusting the voltage limit depending on vehicle data.

## Revendications

1. Procédé de commande d'une limite de tension pour une tension de fonctionnement maximale admissible dans un réseau de bord (401) d'un véhicule, dans lequel une tension réelle du réseau de bord est régulée à une tension de consigne, et dans lequel la tension de consigne est inférieure à la tension de fonctionnement maximale admissible, et dans lequel la tension réelle est court-circuitée ou limitée d'une autre manière lorsque la tension réelle dépasse la tension de fonctionnement maximale admissible dans le réseau de bord (401), comportant l'étape consistant à :
- adapter (S203) la limite de tension en fonction de données de véhicule,
**caractérisé en ce que** les données de véhicule représentent la vitesse du véhicule et la limite de tension est adaptée en fonction de la vitesse,
dans lequel la limite de tension est augmentée lorsqu'une vitesse prédéfinie du véhicule est dépassée, et dans lequel la limite de tension est de nouveau abaissée lorsque la vitesse du véhicule repasse en dessous de la vitesse prédéfinie.

2. Procédé selon la revendication 1, dans lequel la limite de tension sous la vitesse prédéfinie est fixée à une valeur prédéfinie, en particulier une valeur inférieure à 60 V.

3. Procédé selon l'une des revendications précédentes, dans lequel une valeur de tension, qui représente une rupture de charge dans le réseau de bord, est fixée en fonction de la limite de tension adaptée.

4. Procédé selon la revendication 3, dans lequel la valeur de tension, qui représente une rupture de charge dans le réseau de bord, se situe respectivement autour d'une grandeur prédéfinie au-dessus de la limite de tension adaptée.

5. Procédé selon l'une des revendications précédentes, dans lequel les données de véhicule sont des données qui indiquent un actionnement d'une pédale de frein, et la limite de tension est adaptée en fonction d'un actionnement de la pédale de frein.

6. Procédé selon la revendication 5, dans lequel la limite de tension est augmentée lorsqu'une pédale de frein est actionnée et la limite de tension augmentée est abaissée après un laps de temps prédéfini après un relâchement de la pédale de frein.

7. Procédé selon l'une des revendications précédentes, dans lequel les données de véhicule indiquent une accélération du véhicule et la limite de tension est adaptée en fonction d'une accélération.

8. Dispositif de commande d'une limite de tension pour une tension de fonctionnement maximale admissible dans un réseau de bord (401) d'un véhicule, lequel dispositif est conçu pour mettre en œuvre toutes les étapes du procédé selon l'une des revendications précédentes, comportant :
- des moyens pour déterminer une tension réelle du réseau de bord,
- des moyens pour réguler la tension réelle du réseau de bord à une tension de consigne,
- des moyens pour court-circuiter ou limiter d'une autre manière la tension réelle et
- un dispositif d'adaptation (407, 411) pour adapter la limite de tension en fonction de données de véhicule.
